Europäisches Patentamt

European Patent Office

Office européen des brevets

(11) Veröffentlichungsnummer: **0 305 832**
**A2**

(12) **EUROPÄISCHE PATENTANMELDUNG**

(21) Anmeldenummer: **88113569.3**

(22) Anmeldetag: **20.08.88**

(51) Int. Cl.⁴: **G02B 6/36**

(30) Priorität: **01.09.87 DE 3729075**

(43) Veröffentlichungstag der Anmeldung:
**08.03.89 Patentblatt 89/10**

(84) Benannte Vertragsstaaten:
**CH FR GB IT LI SE**

(71) Anmelder: **GEBR. SCHMIDT FABRIK FUR FEINMECHANIK**
**Feldbergstrasse 1**
**D-7742 St. Georgen/Schwarzwald(DE)**

(72) Erfinder: **Sondergeld, Manfred, Dr.**
**Glasbachweg 18**
**D-7742 St. Georgen/Schwarzwald(DE)**
Erfinder: **Wissig, Claus**
**Kirnachweg 12**
**D-7742 St. Georgen/Schwarzwald(DE)**

(74) Vertreter: **Witte, Alexander, Dr.-Ing.**
**Schickhardtstrasse 24**
**D-7000 Stuttgart 1(DE)**

(54) **Steckverbindung für Lichtleiter.**

(57) Eine Steckverbindung (1) für Lichtleiter weist ein erstes Steckerteil (13) und ein zweites Steckerteil (13`) auf, in denen Lichtleiterabschnitte (11, 11`) an eine transparente Stirnfläche geführt sind. Die Steckerteile (13, 13`) sind derart miteinander verrastbar, daß die Stirnflächen in einer Radialebene (3, 4) aneinanderstoßen.

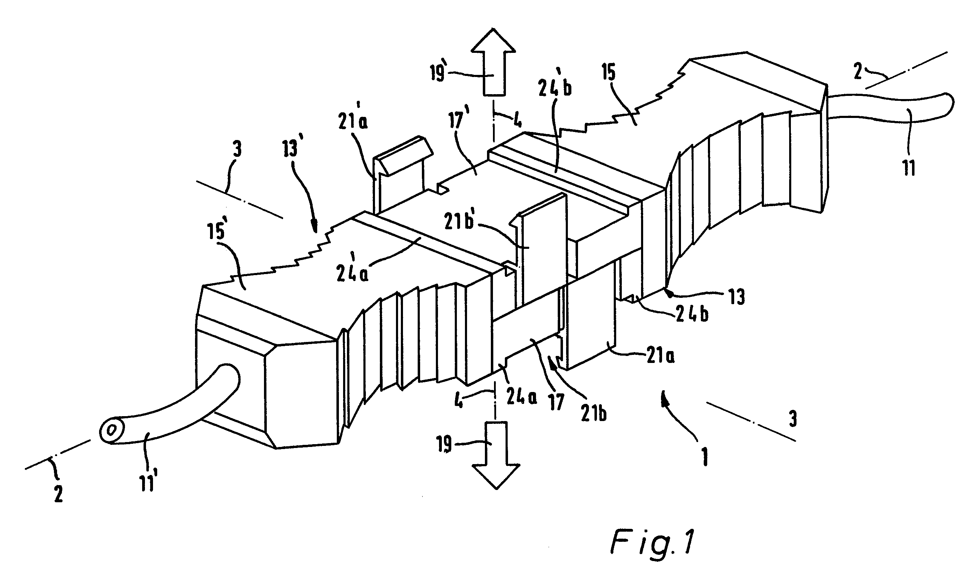

Um insbesondere bei fest installierten Steckverbindungen dieser Art zum Ausführen der Bewegungen beim Zusammenfügen und Lösen der Verbindung keine Kabellänge zugeben zu müssen, sind die Steckerteile (13, 13`) durch Verschiebung der Stirnflächen (67, 67`) in der Radialebene (3, 4) voneinander lösbar bzw. miteinander verbindbar (Fig. 1).

Fig.1

Xerox Copy Centre

## Steckverbindung für Lichtleiter

Die Erfindung betrifft eine Steckverbindung für Lichtleiter mit einem ersten Steckerteil und einem zweiten Steckerteil, in denen Lichtleiterabschnitte an eine transparente Stirnfläche geführt sind, wobei die Steckerteile derart miteinander verrastbar sind, daß die Stirnflächen in einer Radialebene aneinanderstoßen.

Steckverbindungen der vorstehend genannten Art sind allgemein bekannt.

Lösbare Lichtleiter-Verbindungen üblicher Art werden in axialer Richtung gesteckt. Dies bedeutet, daß beim Zusammenfügen ebenso wie beim Lösen der Steckverbindung ein bestimmter axialer Weg zurückgelegt werden muß, um die Steckerteile aus ihrer Schraub-, Bajonett- oder sonstigen mechanischen Verbindung voneinander zu lösen bzw. miteinander zu verbinden. Werden bekannte Steckverbindungen in einer Anlage fest installiert, so ist es erforderlich, für die erforderliche Schließ- oder Lösebewegung eine entsprechende Kabelzugabe vorzusehen. Dies erschwert die Installation derartiger Lichtleiter-Verbindungen erheblich, weil die Kabelzugabe als Kabelschlaufe mit besonderem Aufwand verlegt werden muß, sofern die Platzverhältnisse überhaupt die räumliche Anordnung einer solchen Kabelzugabe gestatten.

Die bekannten Steckverbindungen für Lichtleiter sind ferner so ausgestaltet, daß entweder ein Steckerteil mit einem konstruktiv andersartigen Kupplungsteil miteinander verbunden wird oder aber es sind zwei untereinander identische Steckerteile vorgesehen, die dann jedoch mittels eines speziellen Kupplungsteils in Verbindung gebracht werden müssen. Bei allen bekannten Steckverbindungen für Lichtleiter sind demzufolge mindestens zwei unterschiedliche Steckerteile erforderlich. Dies hat zur Folge, daß zum Herstellen derartiger Steckverbindungen mindestens zwei unterschiedliche Steckerteile auf Lager gehalten werden müssen, außerdem erhöht sich hierdurch der konstruktive Aufwand und es steigen auch die Fertigungskosten, weil pro Steckverbindung immer zwei unterschiedliche Teile hergestellt werden müssen.

Bekannte Steckverbindungen für Lichtleiter haben schließlich den Nachteil, daß sie gegen Verschmutzungen in der Verbindungsebene unzureichend geschützt sind, so daß sich unerwünschte Dämpfungserscheinungen und damit Signalverluste am Übergang der Steckverbindung ergeben können. Zwar wäre es möglich, derartige Steckverbindungen von Zeit zu Zeit zu reinigen, die bekannten Steckverbindungen für Lichtleiter sind jedoch konstruktiv relativ kompliziert ausgeführt, so daß sie für Reinigungszwecke an den Stirnflächen nur schwierig zugänglich sind.

Schließlich haben bekannte Steckverbindungen für Lichtleiter den Nachteil, daß sie nur unzureichend gegen mechanische Erschütterungen gesichert sind. Es kann demzufolge bei bekannten Steckverbindungen geschehen, daß sich die in Verbindung stehenden Elemente, insbesondere die aneinander anliegenden Stirnflächen voneinander lösen, so daß zusätzliche Dämpfungsverluste eintreten können, insbesondere dann, wenn sich in den entstehenden Spalten Verschmutzungen absetzen.

Der Erfindung liegt daher die Aufgabe zugrunde, eine Steckverbindung der eingangs genannten Art dahingehend weiterzubilden, daß die vorstehend genannten Nachteile vermieden werden.

Diese Aufgabe wird erfindungsgemäß dadurch gelöst, daß die Steckerteile durch Verschiebung der Stirnflächen in der Radialebene voneinander lösbar bzw. miteinander verbindbar sind.

Die der Erfindung zugrundeliegende Aufgabe wird auf diese Weise vollkommen gelöst. Die rein radial gerichtete Bewegung der Steckerteile beim Lösen bzw. beim Schließen der Steckverbindung bringt es nämlich zunächst mit sich, daß eine Kabelzugabe für diese Bewegung nicht erforderlich ist, weil die Steckerteile nicht in axialer Richtung bewegt werden. Die erfindungsgemäße Steckverbindung eignet sich daher in besonderem Maße für feste Installationen, z.B. in Meßgeräten, in Kraftfahrzeugen oder dgl., bei denen die Lichtleiter mit Kabelschellen fest an Gehäusen oder dgl. fixiert werden und bis zu den Steckverbindungen hin dicht nebeneinander parallel geführt werden können, ohne daß spezielle Ausweichräume für Kabelschlaufen als Zugabe für ein Lösen oder Schließen der Verbindung vorgesehen werden müßten.

Bei einer bevorzugten Ausgestaltung der Erfindung sind die Steckerteile identisch ausgebildet.

Diese Maßnahme hat den Vorteil, daß der konstruktive Aufwand, die Lagerhaltung und auch die Herstellkosten erheblich vermindert werden, weil sie jede Steckverbindung nur zwei identische Teile erforderlich sind.

Besonders bevorzugt ist, wenn die Steckerteile im verbundenen Zustand zu einem Mittelpunkt der Stirnfläche punktsymmetrisch angeordnet sind.

Diese Maßnahme hat den Vorteil, daß die Steckerteile in beliebiger Richtung voneinander gelöst werden können, weil es aufgrund der Punktsymmetrie grundsätzlich gleichgültig ist, welches der beiden Steckerteile festgehalten und welches bewegt wird.

Bei einer weiteren bevorzugten Ausgestaltung der Erfindung sind die Lichtleiterabschnitte in den Steckerteilen mittels einer Kabelhülse in einer Richtung geführt, die im wesentlichen senkrecht von der Radialebene verläuft.

Auch diese Maßnahme hat den Vorteil, daß eine besonders platzsparende Bauweise entsteht, weil die Lichtleiterabschnitte in den Steckerteilen auf dem kürzest möglichen Weg zu der Stirnfläche geführt werden.

Besonders bevorzugt ist bei diesem Ausführungsbeispiel, wenn die Lichtleiterabschnitte in den Kabelhülsen von formschlüssigen Haltemitteln des jeweils anderen Steckerteils gehalten werden.

Diese Maßnahme hat den Vorteil, daß die Steckerteile in besonders einfacher Weise miteinander verklipst werden können, so daß kein Einsatz von speziellem Werkzeug erforderlich ist.

Dies kann beispielsweise dadurch geschehen, daß die Kabelhülsen an Abschnitten ihrer Länge, über mindestens einen Teil ihres Umfanges freiliegend, vom Steckerteil gehalten werden und die Haltemittel an den freiliegenden Umfangsteilen angreifen.

Diese Maßnahme hat den Vorteil, daß eine besonders sichere Verbindung hergestellt wird, weil die in Eingriff zu bringenden formschlüssigen Mittel unmittelbar an der Kabelhülse angreifen, so daß bei symmetrischem Aufbau der Steckverbindung beide Kabelhülsen unmittelbar formschlüssig miteinander in Verbindung gebracht werden.

Besonders bevorzugt ist in diesem Falle, wenn die Haltemittel als elastische Schnappzangen ausgebildet sind.

Diese Maßnahme hat den besonderen Vorteil, daß ein definierter Druckpunkt beim Schließen der Steckverbindung entsteht, in dem eine optimale Verbindung der beiden Lichtleiterabschnitte gewährleistet ist.

Weiterhin ist eine Ausführungsform der Erfindung bevorzugt, bei der die Kabelhülsen mit kreiszylindrischer Außenkontur versehen und die Schnappzangen als einseitig offenes Klauenpaar ausgebildet sind, das eine kreiszylindrische Aufnahme aufweist und mit Einführschrägen an den freien Enden der Klauen versehen ist.

Diese Maßnahmen haben eine besonders wirkungsvolle und einfache bauliche Gestaltung zur Folge, weil das Klauenpaar mit seiner kreiszylindrischen Aufnahme, deren Innendurchmesser zweckmäßigerweise etwas kleiner als der der Kabelhülse ist, die Kabelhülse sicher umgreift, gleichzeitig aber durch die Einführschrägen an den freien Enden der Klauen sichergestellt ist, daß die Steckverbindung auch ohne besonderen Kraftaufwand geschlossen werden kann.

Eine besonders gute Wirkung wird bei einem weiteren Ausführungsbeispiel der Erfindung dadurch erzielt, daß die Steckerteile mit einer Keilfläche versehen sind, die beim Zusammenfügen der Steckerteile eine kraftschlüssige Anlage der Stirnflächen aufeinander bewirkt.

Diese Maßnahme hat den Vorteil, daß durch eine gezielte axiale Bewegung der Steckerteile aufeinander zu die Stirnflächen unter Flächenpressung aneinander zur Anlage gebracht werden und dort unter fortbestehender Flächenpressung weiter aneinander anliegen, so daß auch bei starken Erschütterungen, Schwingungen und dgl. keine Spaltbildung zwischen den Stirnflächen auftreten kann und damit auch Dämpfungserscheinungen infolge von Verschmutzungen im Langzeitgebrauch sicher vermieden werden.

Bevorzugt ist bei diesem Ausführungsbeispiel, wenn die Keilflächen an einem Führungsblock angebracht sind, der die Kabelhülse axial fest aufnimmt.

Diese Maßnahme hat den Vorteil, daß die axiale Verriegelung der Steckverbindung unabhängig davon ist, welche Kabelhülse im einzelnen verwendet wird. Die Kabelhülse kann somit an unterschiedliche Lichtleiterarten angepaßt werden, ohne daß die konstruktive Gestalt des Führungsblocks abgeändert werden muß.

Diese Vorteile werden weiterhin dadurch gefördert, daß die Kabelhülsen aus den Führungsblöcken axial herausragen und dort von der Schnappzange des jeweils anderen Steckerteils ergriffen werden, wobei die Schnappzangen mit einer Stirnfläche auf der Keilfläche laufen.

Diese Maßnahme hat den Vorteil, daß die Schnappzangen einen Doppelnutzen bringen, weil sie nicht nur die Kabelhülse des jeweils anderen Steckerteils halten sondern gleichzeitig auch das Gegenstück zur Keilfläche für die axiale Verriegelung der Steckerteile bilden.

Eine besonders gute Wirkung wird in diesem Zusammenhang auch dadurch erzielt, daß die Kabelhülsen beidseitig aus den Führungsblöcken herausragen und beidseitig von Schnappzangen des jeweils anderen Steckerteils ergriffen werden.

Die auf diese Weise entstehende kammartige Struktur, bei der die Schnappzangen und die Führungsblöcke beider Steckerteile wie zwei Kämme ineinander fassen, hat den Vorteil, daß eine besonders sichere mechanische Verriegelung sowohl in axialer wie in radialer Richtung erreicht wird.

Bei bevorzugten Ausführungsbeispielen der Erfindung weisen die Steckerteile Verbindungsteile auf die mit Anlageflächen versehen sind, die senkrecht zur Radialebene und durch den Mittelpunkt der Stirnfläche verlaufen.

Diese Maßnahme hat den Vorteil, daß die bereits erwähnte punktsymmetrische Anordnung der Steckerteile entsteht, bei der eine Trennebene im Außenbereich der Verbindungsteile in eine Ebene, beispielsweise einer Horizontalebene verläuft.

Besonders bevorzugt ist, wenn die Verbindungsteile den Spannzangen und vorzugsweise auch mit den Führungsblöcken einstückig ausgebildet sind.

Dies hat den Vorteil, daß die Verbindungsteile z.B. als Kunststoff-Spritzteile oder als Metall-Spritzteile in großer Serie zu geringen Kosten hergestellt werden können und eine weitere Montage von Spannzangen oder Führungsblöcken nicht mehr erforderlich ist.

Bei weiteren bevorzugten Ausführungsformen der Erfindung sind die Verbindungsteile an ihren von der Radialebene abgewandten Enden mit Rasten versehen und im zusammengefügten Zustand der Verbindungsteile sind Verriegelungskappen über die zusammengefügten Verbindungsteile schiebbar, die mit Gegenrasten elastisch hinter die Rasten greifen.

Diese Maßnahme hat den Vorteil, daß eine weitere Sicherung der zusammengefügten Verbindungsteile dadurch erreicht wird, daß die Verriegelungskappen an beiden Enden der Verbindungsteile diese jeweils paarweise schließen und gegeneinander verrasten.

Bevorzugt ist dabei, wenn die Verriegelungskappen mit Hohlräumen versehen sind, derart, daß bei manuellem Zusammendrücken der Hohlräume die Gegenrasten sich von den Rasten lösen.

Diese Maßnahme hat den Vorteil, daß die Verriegelungskappen manuell leicht wieder gelöst werden können, wenn ein Lösen der Steckverbindung erforderlich ist.

Bei Ausführungsbeispielen der Erfindung sind die Kabelhülsen im Bereich der Stirnfläche mit einer transparenten Kugel versehen, an die auf der von der Stirnfläche abgewandten Seite der Lichtleiterabschnitt stirnseitig angrenzt.

Diese Maßnahme hat den Vorteil, daß das aus der vorzugsweise polierten Stirnfläche des Lichtleiters austretende Licht mittels der transparenten Kugel, die nach Art einer "Schusterkugel" wirkt, auf einen größeren Querschnitt verteilt wird. Selbst wenn infolge von Fertigungstoleranzen oder aufgrund anderer Einflüsse ein geringer radialer Versatz der beiden Steckerteile gegeneinander auftreten sollte, hätte dies nur eine vernachlässigbare Signaldämpfung zur Folge, weil die Kugel relativ großen Durchmessers ein Lichtbündel ebenfalls großen Durchmessers erzeugt, daß selbst bei radialem Versatz immer noch ein sehr hohes Ausmaß an Flächenüberdeckung an den beiden Steckerteilen aufweist.

Eine gute Wirkung wird dabei dadurch erzielt, daß eine Stirnseite des Lichtleiterabschnitts im Abstand von der Oberfläche der transparenten Kugel angeordnet ist. Insbesondere kann der Abstand so bemessen sein, daß die Stirnseite sich im Brennpunkt der Kugel befindet.

Diese Maßnahme hat den Vorteil, daß optimale optische Verhältnisse entstehen, weil bei einer Abstrahlung des Lichtes aus dem Lichtleiter aus der Stirnseite des aktiven Querschnitts am Ort des Brennpunktes der Kugel der "Schusterkugeleffekt" besonders gut gelingt und eine möglichst gleichmäßige Verteilung des Lichtes auf den gesamten Querschnitt der Kugel stattfindet.

Zweckmäßigerweise ist dabei die Kugel in einem den Abstand herstellenden Kugelbett gelagert.

Diese Maßnahme hat den Vorteil, daß die Kugel nicht nur schont in einem auf ihrer Geometrie angepaßten Kugelbett gelagert wird, es wird ferner auf diese Weise mechanisch der zuvor beschriebene Abstand eingestellt und langfristig gewährleistet.

Besonders bevorzugt ist, wenn die Kugel mittels eines transparenten Schutzfensters zur Stirnfläche hin gekapselt ist.

Diese Maßnahme hat den Vorteil, daß Verschmutzungen der empfindlichen optischen Innenelemente der Steckverbindung sicher vermieden werden.

Diese Vorteile werden auch dadurch gefördert, daß die Kugel und das stirnseitige Ende des Lichtleiterabschnittes Dichtungen in einer Längsbohrung der Kabelhülse gekapselt sind.

Bevorzugt ist ferner, wenn der Lichtleiterabschnitt an seinem Umfang in die Kabelhülse eingequetscht ist, insbesondere wenn der Lichtleiterabschnitt abschnittsweise im Querschnitt reduziert und an unterschiedlichen Querschnitten in die Kabelhülse eingequetscht ist.

Diese Maßnahmen haben den Vorteil, daß eine sichere axiale Halterung des Lichtleiterkabels in der Kabelhülse erzielt wird, so daß selbst bei erheblichem Zug am Kabel ein Lösen vom Steckerteil nicht befürchtet werden muß.

Ein besonders bevorzugtes Ausführungsbeispiel dieser Variante zeichnet sich dadurch aus, daß der Lichtleiterabschnitt in einem Bereich kleineren Querschnitts in eine Faserendhülse unter Erzeugung eines Polygonquerschnitts der Faserendhülse eingequetscht ist, daß auf den Polygonquerschnitt die Kabelhülse auf einen Bereich größeren Querschnitts aufgeschoben ist und dort unter Erzeugung eines um einen halben Polygon-Mittelpunktwinkels versetzten Polygons der Kabelhülse eingequetscht wird.

Diese Maßnahmen haben den Vorteil, daß beim Quetschen (Crimpen) des Faserendhülse ein Außenpolygon, vorzugsweise ein Außen-Sechseck erzeugt wird, das mit seinen Längskanten auf der Innenoberfläche der zunächst zylindrischen Kabelhülse gleiten kann. Durch nochmaliges Verquetschen unter einem Winkelversatz von 30° (bei einem Sechseck-Profil) wird nun eine besonders gute Verquetschung erreicht. Außerdem bewirkt das zweite Quetschen der Kabelhülse, daß die Faserendhülse in der Kabelhülse axial noch nach vorne geschoben wird, so daß die Faserendhülse nach vorne hin das Kugelbett mit der transparenten Kugel axial in der Kabelhülse fixiert.

Eine weitere vorteilhafte Ausführungsform der Erfindung zeichnet sich dadurch aus, daß die Stirnfläche mit einer Ringdichtung versehen ist.

Diese Maßnahme hat den Vorteil, daß beim radialen Zusammenfügen der Steckerteile und beim gleichzeitigen axialen Verrasten durch Aufeinanderliegen der Ringdichtungen eine extrem gute Dichtwirkung erzielt wird, die ebenfalls eine Verschmutzung der Steckverbindung in dem besonders empfindlichen Bereich der Stirnflächen sicher vermeidet.

Weitere bevorzugte Ausführungsformen der Erfindung zeichnen sich dadurch aus, daß die Steckerteile im zusammengefügten Zustand eine im wesentlichen quaderförmige Gestalt aufweisen.

Diese Maßnahme hat den Vorteil, daß insbesondere bei fester Installation der Steckverbindung eine besonders raumsparende Bauweise möglich ist, weil die quaderförmigen Steckverbindungen dicht an dicht nebeneinander und ggf. übereinander angeordnet werden können.

Hierzu ist weiterhin besonders bevorzugt, wenn bei Ausführungsformen der Erfindung eine Montageschiene im wesentlichen senkrecht zur Verschieberichtung der Steckerteile angeordnet ist und die Steckerteile mit Haltemitteln an der Montageschiene befestigbar sind.

Diese Maßnahme hat den Vorteil, daß bei stationärer Installation zahlreiche Steckverbindungen nebeneinander an der Montageschiene sicher fixiert werden können.

Bevorzugt ist dabei, wenn die Haltemittel als Haken ausgebildet sind, die an den Steckerteilen angeordnet und elastisch in Aussparungen der Montageschiene einklipsbar sind.

Diese Maßnahme hat den Vorteil, daß zahlreiche Steckverbindungen nebeneinander auf die Montageschiene aufgeklipst werden können, wobei das jeweils nicht-eingeklipste Steckerteil von der Montageschiene weg radial vom anderen Steckerteil gelöst werden kann. Es ist jedoch ohne weiteres möglich, die Steckverbindungen auf beiden Seiten mit einer Montageschiene zu fixieren und ggf. die Montageschiene nochmals gesamthaft miteinander zu verbinden, um eine extreme Sicherheit gegen ein Lösen der Steckverbindungen zu erreichen.

Auch bei diesen Ausführungsbeispielen der Erfindung ist bevorzugt, wenn die Haken einstückig mit dem Verbindungsteil ausgebildet sind, weil auch in diesem Falle eine besonders kostensparende Fertigung möglich ist.

Weitere Vorteile ergeben sich aus der Beschreibung und der beigefügten Zeichnung.

Es versteht sich, daß die vorstehend genannten und die nachstehend noch erläuterten Merkmale nicht nur in der jeweils angegebenen Kombination sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1 eine perspektivische Gesamtansicht eines Ausführungsbeispiels einer erfindungsgemäßen Steckverbindung im zusammengefügten Zustand;

Fig. 2 und 3 die Steckverbindung der Fig. 1 in zwei zueinander senkrechten Ansichten zur Erläuterung weiterer Einzelheiten, insbesondere in Verbindung mit einer Montageschiene;

Fig. 4 eine Schnittdarstellung, in stark vergrößertem Maßstabe, einer Kabelhülse im zusammengebauten Zustand;

Fig. 5 die Kabelhülse der Fig. 4, in verkleinertem Maßstab und in einer Explosionsdarstellung mit vier Querschnittsdarstellungen a) bis d) zur Erläuterung eines Crimpvorganges;

Fig. 6 eine perspektivische Ansicht, in vergrößertem Maßstabe, eines Verbindungsteiles;

Fig. 7 eine Seitenansicht, im Schnitt, von zwei mit Kabelhülsen und Lichtleitern bestückten Verbindungsteilen, unmittelbar vor dem Zusammenfügen;

Fig. 8 und 9 zwei Ansichten zur Erläuterung der Anbringung von Verriegelungskappen.

In den Fig. 1 bis 3 bezeichnet 1 insgesamt ein Ausführungsbeispiel einer erfindungsgemäßen Steckverbindung. Eine erste Achse 2 bilde eine Hauptachse, in der sich im Bereich der Steckverbindung 1 die miteinander in Verbindung zu bringenden Lichtleiter erstrecken, während eine zweite Achse 3 und eine dritte Achse 4 hierzu jeweils senkrechte Achsen bilden und in der Mitte der Steckverbindung 1 eine Radialebene 3/4 definieren.

Ein erster Lichtleiterabschnitt 11 führt zu einem ersten Steckerteil 13 und ein zweiter Lichtleiterabschnitt 11` zu einem zweiten Steckerteil 13`. Die Steckerteile 13, 13` sind an ihren von der Radialebene 3/4 weg weisenden Enden mit Verriegelungskappen 15, 15` versehen. Zwischen den Verriegelungskappen 15, 15` erkennt man zwei aufeinanderliegende Verbindungsteile 17, 17`. Diese Elemente werden weiter unten noch im einzelnen erläutert werden.

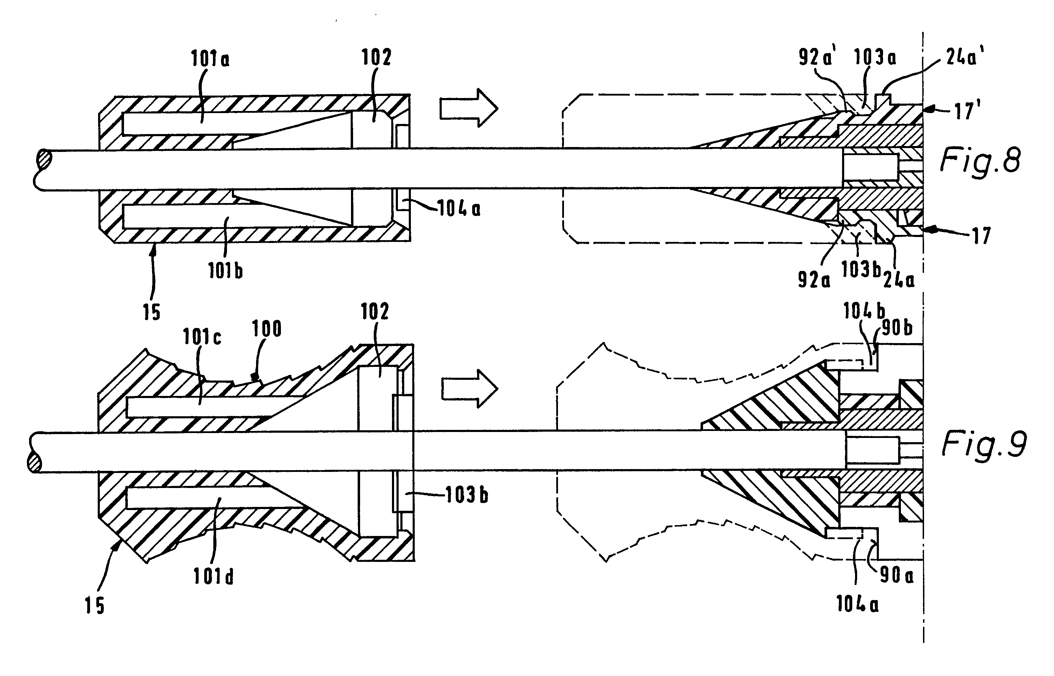

Um die Steckverbindung 1 aus der in Fig. 1 eingezeichneten geschlossenen Stellung zu lösen, ist es erforderlich, zunächst die Verriegelungskappen 15,15` abzuziehen, wie weiter unten zu Fig. 8 und 9 noch gezeigt werden wird und dann das erste Steckerteil 13 mit dem Verbindungsteil 17 in Richtung des Pfeiles 19 nach unten und/oder das zweite Steckerteil 13` mit Verriegelungskappe 15` und Verbindungsteil 17` in Richtung des Pfeils 19` nach oben, beides in Richtung der dritten Achse 4 auseinander zu bewegen. Eine Schließbewegung erfolgt in entgegengesetzter Reihenfolge und Richtung.

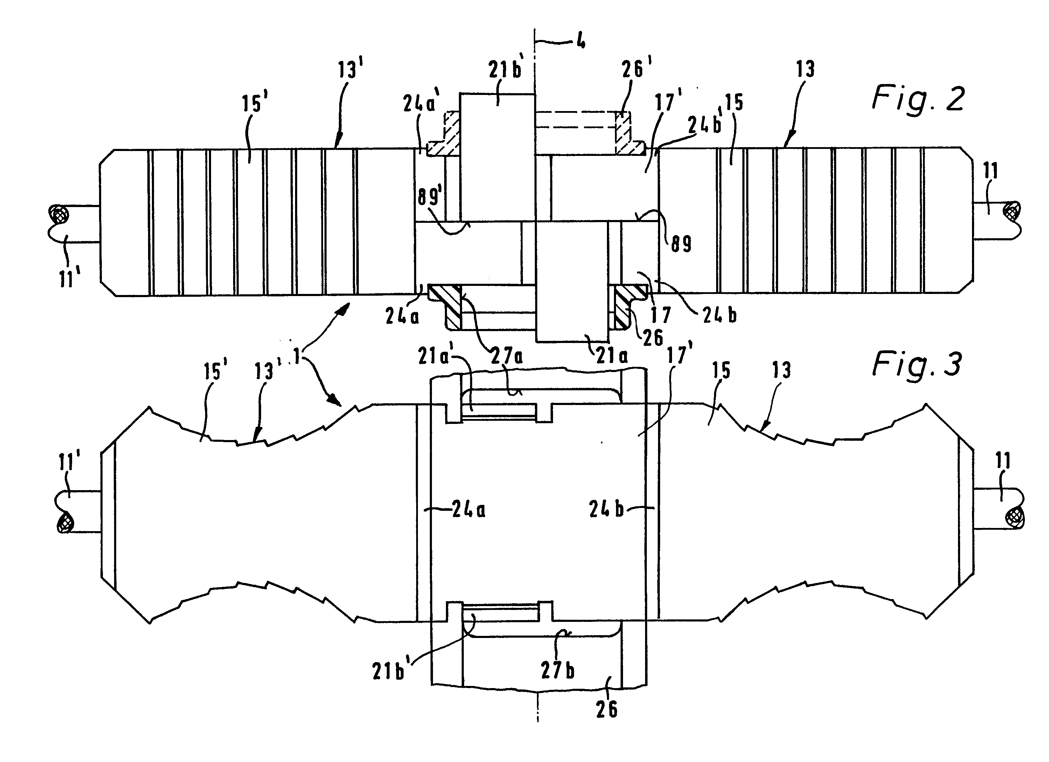

Wie man ferner aus den Fig. 1 bis 3 erkennen kann, sind die Verbindungsteile 17 und 17` mit ersten Schnapphaken 21a sowie (in Fig. 1 nicht erkennbar) 21 bzw. 21a` und 21b` versehen. Außerdem erstrecken sich im Abstand von der Radialebene 3/4 parallel zur zweiten Achse 3 Randleisten 24a, 24b am Verbindungsteil 17 bzw. 24a` und 24b` am Verbingsteil 17`, wobei die vorgenannten Elemente insgesamt dazu dienen, um die Steckverbindung 1 an einer in den Fig. 2 und 3 erkennbaren Montageschiene 26 zu befestigen. Die Montageschiene 26 verläuft in Richtung der zweiten Achse 3 und zwar symmetrisch zur Radialebene 3/4. Die Montageschiene 26 wird seitlich von den Randleisten 24a und 24b geführt und die Schnapphaken 21a und 21b greifen in Aussparungen 27a, 27b, um das Verbindungsteil 17 dort einzuklipsen.

In entsprechender Weise kann oberhalb des zweiten Verbindungsteils 17` ebenfalls eine Montageschiene 26` in entsprechender Weise geführt und angeklipst sein.

Da die Steckverbindung 1, wie deutlich aus Fig. 1 erkennbar ist, zumindest im Bereich der Verbindungsteile 17 und 17` eine im wesentlichen quaderförmige Gestalt aufweist, können auf diese Weise mehrere Steckverbindungen nebeneinander raumsparend auf der Montageschiene 26 angeordnet werden. Durch die Öffnungs- bzw. Schließbewegung in Richtung der Pfeile 19, 19` braucht darüberhinaus an den Lichtleiterabschnitten 11 und 11` keine Zugabe vorgesehen zu werden, um die Steckverbindung 1 zu lösen oder zu schließen, weil die Steckerteile 13 und 13` auf einer Kreisbahn geführt werden können, deren Mittelpunkt am nächsten Befestigungspunkt der Lichtleiterabschnitte 11 und 11` liegt.

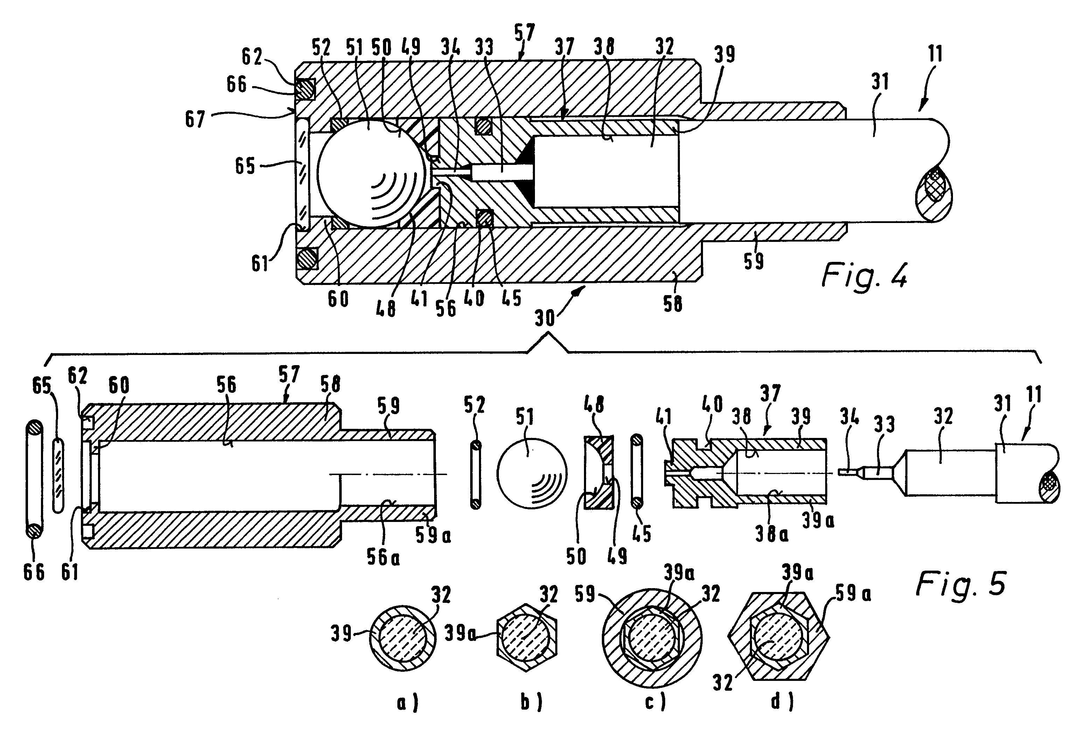

Im Inneren der Steckerteile 13 und 13` sind die Lichtleiterabschnitte 11 und 11` in Linsenkupplungen 30 gehalten, die in den Fig. 4 und 5 gesamthaft mit 30 bezeichnet sind.

Der Lichtleiterabschnitt 11 ist über seine Länge im Bereich dre Linsenkupplung 30 von einem ursprünglichen ersten Querschnitt 31 stufenweise auf einen zweiten Querschnitt 32, einen dritten Querschnitt 33 und einen vierten Querschnitt 34 reduziert, wobei der vierte Querschnitt 34 dem aktiven Bereich des Lichtleiterabschnitts 11 entspricht und vorzugsweise mit einer polierten Stirnfläche versehen ist.

Der Lichtleiterabschnitt 11 wird mit seinem mehrfach querschnittsreduzierten Ende in eine Faserendhülse 37 eingeführt, die hierzu mit einer geeignet konturierten gestuften Längsbohrung 38 versehen ist. Das in Fig. 5 rechte Ende der Faserendhülse 37 ist als erster Quetschhals 39 ausgebildet. An ihrem Außenumfang ist die Faserendhülse 37 mit einer Ringnut 40 versehen. Die Faserendhülse 37 läuft in Fig. 5 links vorne in einen querschnittsverminderten Fortsatz 41 aus.

Ein erster O-Ring 45 ist die Ringnut 40 einsetzbar.

Die Faserendhülse 37 faßt mit ihrem Fortsatz 41 in eine entsprechende Bohrung 49 eines Kugelbetts 48, das an der von der Faserendhülse 37 abgewandten Seite mit einer sphärischen Aufnahme 50 für eine Glaskugel 51 versehen ist. Das Kugelbett 48 ist so ausgebildet, daß ein definierter Abstand zwischen der Oberfläche der Glaskugel 51 und der Stirnfläche des vierten querschnitts 34 eingestellt wird. Vorzugsweise befindet sich die Stirnfläche im Brennpunkt der Glaskugel 51. Die Glaskugel 51 weist einen wesentlich größeren Durchmesser als der vierte, aktive Querschnitt 34 des Lichtleiterabschnitts 11 auf. Bei einem typischen Ausführungsbeispiel der Erfindung kann der Durchmesser der Glaskugel 51 etwa 3 mm und damit das ca. 30fache des Durchmessers des vierten Querschnitts 34 betragen. Vor der Glaskugel 5 auf der vom Kugelbett 48 abgewandten Seite ist ein zweiter O-Ring 52 angeordnet.

Zur Montage der Linsenkupplung 30 wird der erste Lichtleiterabschnitt 11 mit dem mehrfach querschnittsverminderten Ende in die Faserendhülse 37 eingeführt und dort im Bereich des ersten Quetschhalses 39 angequetscht. Der erste O-Ring 45 wird in die Ringnut 40 eingelegt und das Kugelbett 48 wird vorne auf den Fortsatz 41 der Faserendhülse 37 aufgesteckt. Die Glaskugel 51 wird in die sphärische Aufnahme 50 des Kugelbetts 48 eingelegt und die so gebildete Gesamtanordnung wird mit vorne aufgesetztem zweiten O-Ring 52 in eine Längsbohrung 56 einer Kabelhülse 57 in Fig. 5 von rechts axial eingeführt.

Die Kabelhülse 57 weist einen vorderen dickwandigen Abschnitt 58 und eine zweiten Quetschhals 59 auf, in dessen Bereich der erste Lichtleiterabschnitt 11 mit seinem ersten, unverminderten Querschnitt 31 angequetscht wird.

Die Darstellungen a) bis d) der Fig. 5 zeigen den Quetschvorgang im einzelnen. Zunächst wird der Endbereich des Lichtleiterabschnitts 11, der den ersten verminderten Querschnitt 32 aufweist, mit seiner zylindrischen Außenkontur in den hohlzylindrischen Quetschhalts 39 eingeführt, der im oberen Teil der Fig. 5 oberhalb des Symmetrielinie gezeigt ist.

Mittels eines geeigneten Quetschwerkzeuges, nämlich einer Crimpzange oder dgl., wird nun dem hohlzylindrischen Quetschhals 39 z.B. einer Sechseck-Außenkontur verliehen, wie sie die Darstellung b) in Fig. 5 zeigt und wie sie im oberen Teil der Fig. 5 unterhalb der Symmetrielinie angedeutet ist. Dort ist auch gezeigt, daß die Längsbohrung 38a nach dem Crimpen etwas reduziert ist.

Das Außenprofil des Quetschhalses 39a ist so bemessen, daß die Polygonkanten an der zunächst zylindrischen Innenoberfläche des ebenfalls hohlzylindrischen zweiten Quetschhals 59 anliegen, wie die Darstellung c) zeigt. Auf diese Weise wird eine sichere axiale Führung erreicht, bei der die optische Achse, d.h. der Mittelpunkt des Lichtleiterabschnitts unverändert bleibt.

Mittels eines weiteren Quetschwerkzeuges wird nun auch der zweite Quetschhals 59 verformt und zwar ebenfalls zu einem Polygon-Querschnitt, beispielsweise einem Außensechskant-Profil. Die beiden Polygone der Quetschhälse 39a und 59a sind dabei um einen halben Mittelpunktswinkel, bei Verwendung eines Außensechskantes also um 30° gegeneinander versetzt, so daß eine Kante eines Profils jeweils der Mitte einer Längsseite des anderen Profils gegenübersteht.

Auf diese Weise wird zum einen ein besonders sicherer Formschluß erreicht. Ein weiterer wesentlicher Zweck dieser Maßnahme besteht jedoch darin, daß auch eine geringfügige axiale Bewegung der Faserendhülse 37 erreicht wird, wenn der zweite Quetschhals 59 vercrimpt wird. Wie man nämlich aus Fig. 4 erkennen kann, ist der zweite Quetschhals 59 gegenüber dem ersten Quetschhals 39 geringfügig axial versetzt, so daß ein Vercrimpen des zweiten Quetschalses 59 die Faserendhülse 37 in Fig. 4 geringfügig nach links drückt, weil das Material dem Quetschvorgang ausweicht. Auf diese Weise wird also die Faserendhülse 37 mit dem Kugelbett 48 und der Glaskugel 51 in Fig. 4 nach links gegen den zweiten O-Ring 52 gedrückt, so daß eine besonders exakte und gegen Erschütterungen gesicherte Anordnung in der Linsenkupplung 30 erzielt wird.

Es wurde also der Lichtleiterabschnitt 11 mit der Faserendhülse 37 so fest axial in die Längsbohrung 56 eingeführt, daß die Glaskugel 51 sich vorne fest an den zweiten O-Ring 52 anlegt und diesen gegen eine Innen-Ringschulter 60 in der Längsbohrung 56 der Kabelhülse 57 andrückt, wie deutlich aus Fig. 4 zu erkennen ist.

Die Ringschulter 60 definiert an ihrer in Fig. 5 linken Vorderseite eine stirnseitige Vertiefung 61 zylindrischer Gestalt, um die herum eine Ringnut 62 angeordnet ist. In die stirnseitige Vertiefung 61 wird ein transparentes Schutzfenster 65 eingeklebt oder eingeschweißt und in die Ringnut 62 ein dritter O-Ring 66 eingelegt.

Auf diese Weise entsteht eine vordere Stirnfläche 67 der Linsenkupplung 30, die sioh exakt in der Radialebene 3/4 der Steckverbindung 1 befindet. Durch das Einkleben oder Einschweißen des transparenten Schutzfenster 65 ergibt sich eine dichte Kapselung der optischen Elemente im Inneren der Linsenkupplung 30, die zusätzlich auch durch die O-Ringe 45, 52 und 66 ebenso wie durch das Verquetschen an den Quetschhälsen 39 und 59 gewährleistet wird.

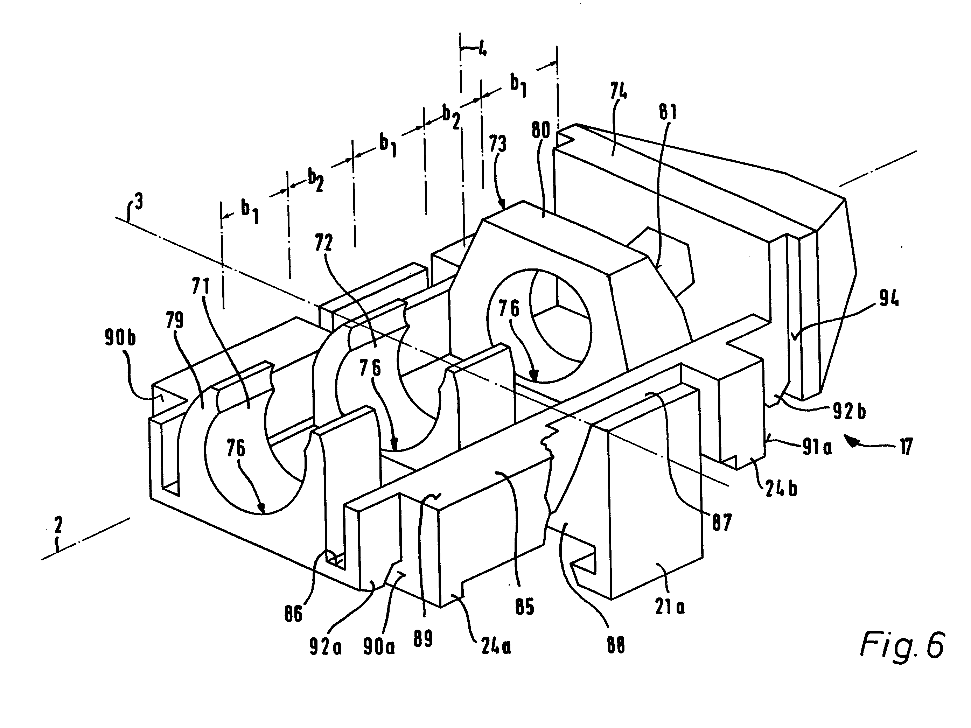

Fig. 6 zeigt ein Verbindungsteil 17.

Das Verbindungsteil 17 weist einen näherungsweise quaderförmigen Grundkörper auf, der in der Mitte axial mit einer quaderförmigen Ausnehmung versehen ist. In der quaderförmigen Ausnehmung sind in Richtung der ersten Achse 2 vom in Fig. 6 linken stirnseitigen Ende aus gesehen zwei Schnappzangen 71, 72 beabstandet hintereinander angeordnet. In Fortsetzung der ersten Achse 2 ist das Verbindungsteil 17 wiederum beabstandet mit einem Führungsblock 73 sowie, in weiterem Abstand, mit einem Endteil 74 versehen.

Die axiale Dimensionierung und Beabstandung dieser Elemente ist so gewählt, daß die Schnappzangen 71, 72 eine axiale Breite von $b_1$ und der Führungsblock 73 eine axiale Breite $b_2$ aufweisen. Der lichte Abstand zwischen den Schnappzangen 71 und 72 entspricht der Breite $b_2$ des Führungsblocks 73 und die lichten Abstände zwischen der zweiten Schnappzange 72 und dem Führungsblock 73 sowie dem Führungsblock 73 und dem Endteil 74 haben wiederum die gleiche Abmessung $b_1$ wie die Schnappzangen 71, 72.

Dies bedeutet, daß beim Zusammenfügen der Steckverbindung 1, wenn das zweite Verbindungsteil 17` in Fig. 6 von oben auf das erste Verbindungsteil 17 aufgesetzt wird, dessen erste Schnappzange 71` in den Zwischenraum zwischen Führungsblock 73 und Endteil 74 greift, dessen zweite Schnappzange 72` in den Zwischenraum zwischen zweiter Schnappzange 72 und Führungsblock 73 und dessen Führungsblock 73` in den Zwischenraum zwischen den Schnappzangen 71 und 72.

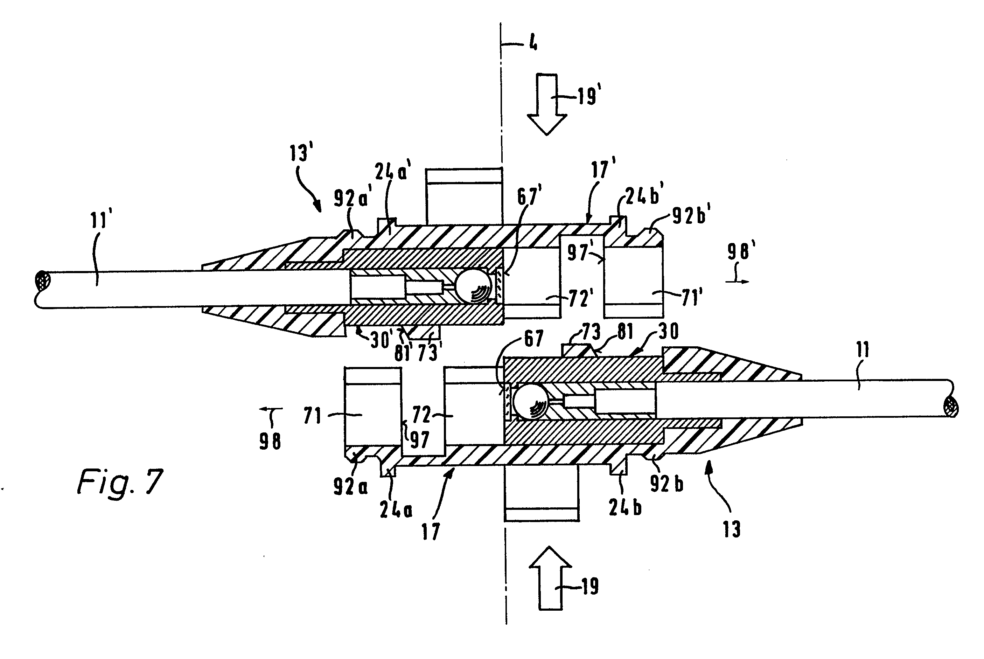

Die Schnappzangen 71 und 72 sind mit kreiszylindrischen Aufnahmen versehen, die im wesentlichen denselben ersten Durchmesser 76 aufweisen, der dem Außendurchmesser des dickwandigen Abschnitts 58 der Kabelhülse 57 entspricht. Das Endteil 74 ist hingegen mit einer Stufenbohrung versehen, die zunächst ein Innenprofil (Innensechskant) 77 aufweist, das dem Außenprofil (Außensechskant) des zweiten Quetschhalses 59 der Kabelhülse 57 entspricht und in einen weiteren zylindrischen Abschnitt mit vermindertem Durchmessers übergeht (vgl. Fig. 7 bis 9), der dem Außendurchmesser des unverminderten ersten Querschnitts 37 des Lichtleiterabschnitts 11 entspricht.

Dies bedeutet, daß beim Montieren der Steckverbindung 1 der unkonfektionierte Lichtleiterabschnitt 11 in Fig. 6 von rechts durch die Längsbohrung des Endteils 74 gesteckt wird, um dann an seinem freien Ende mit der Linsenkupplung 30, wie vorstehend zu den Fig. 4 und 5 erläutert, konfektioniert zu werden. Der Lichtleiterabschnitt 1 wird dann in Fig. 6 wieder nach rechts gezogen, bis er mit der Kabelhülse 57 formschlüssig in den axialen Anschlag des Endteils 74 gelangt. In dieser Position befindet sich die vordere Stirnfläche 67 an der in Fig. 6 rechten Stirnseite der zweiten Schnappzange 72 und somit in der Radialebene 3/4.

Die Schnappzangen 71, 72 weisen jeweils ein Paar von Klauen 79 auf, die an ihren freien Enden mit Einführschrägen versehen sind. Der Führungsblock 73 ist demgegenüber nach Art einer Hülse 80 ausgebildet und überragt die freien Enden der Klauen 79 daher in Richtung der dritten Achse 3.

De Führungsblock 73 ist an der von der Radialebene 3, 4 abgewandten Seite mit einer Keilfläche 81 versehen. Beim Zusammenfügen der Steckverbindung 1 gleitet somit die in Fig. 6 rechte Stirnfläche der ersten Schnappzange 71 auf dieser Keilfläche 81, wie weiter unten zu Fig. 7 erläutert wird.

Das Verbindungsteil 17 in Fig. 6 ist in seinem quaderförmigen Abschnitt mit Seitenteilen 85 versehen. Zur Bildung der quaderförmigen Aussparung sind dort Längsnuten 86 vorgesehen, um die Schnappzangen 71, 72 von den Seitenteilen 85 zu trennen. Im mittleren Bereich des Seitenteils 85 ist dort noch ein Längsschlitz 87 eingebracht, um am Boden des Längsschlitzes 87 ein Filmscharnier 88 zu erzeugen, daß es gestattet, die Schnapphaken 21a, 21a`, 21b` elastisch auszulenken.

Die Seitenteile 85 bilden an ihrer Oberseite eine Auflagefläche 89, wo sie auf entsprechenden Auflageflächen 89` des jeweils anderen Verbindungsteils 17` aufliegen.

Am stirnseitigen Ende sind die Seitenteile 85 mit Ecken 90a, 90bzw. 91a, 91b versehen.

An der Unterseite des Führungsteils 17 erkennt man wiederum die parallel zur zweiten Achse 3 verlaufenden Randleisten 24a, 24b, die nach unten aus der Unterseite des Verbindungsteils 17 vorstehen. An dem um die Ecken 90a, 90b bzw. 91a, 91b verminderten Endabschnitt des Verbindungsteils 17 sind nach unten Rasten 92a bzw. 92b angeformt, die sich parallel zu den Randleisten 24a udn 24b erstrecken. Die Rasten 92a, 92b haben einen etwa trapezförmigen Querschnitt.

Die Endteile 74 sind im wesentlichen nach Art eines Pyramidenstumpfes ausgebildet. An der Basis des Pyramidenstumpfes, d.h. parallel zur Radialebene 3/4 sind die Endteile 74 mit einer Hinterschneidung 94 versehen, die parallel zur dritten Achse 4 an beiden Seiten des Endteils 74 verläuft.

Fig. 7 zeigt die beiden Verbindungteile 17, 17` in bereits bestücktem Zustand, bei dem also die Lichtleiterabschnitte 11 und 11` mit den konfektionierten Faserendhülsen 37 in den Verbindungsteilen 17, 17` montiert sind. Die Verbindungsteile 17, 17` sind bereits so positioniert, daß sich die vorderen Stirnflächen 67 bzw. 67` in einer gemeinsamen Radialebene 3/4 befinden. Durch Verschieben der Verbindungsteile 17, 17` in Richtung der Pfeile 19, 19` von Fig. 7 wird nun die Steckverbindung hergestellt. Dabei laufen zunächst die bereits erwähnten inneren Stirnflächen 97 bzw. 97` der ersten Schnappzangen 71 bzw. 71` auf den Keilflächen 81 bzw. 81` der Führungsblöcke 73 bzw. 73` des jeweils anderen Verbindungsteils 17. Auf diese Weise wird eine geringfügige axiale Bewegungskomponente erzeugt, die im zusammengefügten Zustand der Verbindungsteile 17 und 17` die Linsenkupplungen 30 bzw. 30` in der vorderen Stirnfläche 67 bzw. 67` fest axial zusammenpreßt. Dabei gelangen auch die dritten O-Ringe 66 in Anlage aneinander und verhindern zusätzlich, daß irgendwelche Verschmutzungen in einen Spalt zwischen den Stirnflächen 67 und 67` eindringen können.

Während des Ineinanderführens der Verbindungsteile 17 und 17` gelangen die Kabelhülsen 57, 57` mit der kreiszylindrischen Außenkontur des dickwandigen Abschnitts 58 zunächst in die Einführungsschrägen und dann in den Eingriffsbereich der Klauen 79 der Schnappzangen 71, 71`, 72, 72`, bis der Druckpunkt überwunden ist und die Schnappzangen 71, 71`, 72, 72` die Kabelhülse 57, 57` des jeweils anderen Verbindungsteils 17, 17` elastisch und kraftschlüssig umfaßt. Durch genaue Positionierung der kreiszylindrischen Aufnahmen der Schnappzangen 71, 71`, 72, 72` wird erreicht, daß die Stirnflächen 67, 67` mit keinem oder nur minimalem radialen Versatz aufeinander aufliegen.

Aber selbst wenn beim Zusammenfügen der Verbindungsteile 17, 17` ein geringfügiger radialer Versatz entstünde, wäre dies unkritisch, weil die Glaskugeln 51 bzw. 51` ein Lichtbündel verhältnismäßig großen Querschnitts erzeugen, so daß bei den allenfalls zu erwartenden geringfügigen radialen Versätzen nur ein sehr geringer Grad an Nicht-Überdeckung dieser Lichtbündel vorliegen würde.

Nach dem Zusammenfügen der Verbindungsteile 17, 17`, wie dies zur Fig. 7 erläutert wurde, werden als zusätzliche mechanische Sicherung die Verriegelungskappen 15 und 15` auf die zusammengefügten Enden der Verbindungsteile 17, 17` aufgeschoben.

Die Fig. 8 und 9 zeigen hierzu, daß jede Verriegelungskappe 15 mindestens in einer Koordinatenrichtung mit einer Griffmulde 100 versehen ist. Die Verriegelungskappe 15 ist im Inneren mit vier axialen Hohlräumen 101a, 101b, 101c, 101d sowie einem gemeinsamen vorderen Hohlraum 102 versehen. Der vordere Hohlraum 102 geht, in den Fig. 8 und 9 von rechts gesehen, in eine rechteckförmige Aussparung über. An den Rändern der rechteckförmigen Aussparung sind elastische Gegenrasten 103a und 103b senkrecht zur Oberfläche der Griffmulden 100 sowie parallel zu den Griffmulden 100 Anschläge 104a und 104b vorgesehen, die sich jeweils nur über einen mittleren Teilbereich der Ränder der rechteckförmigen Aussparung erstrekken.

Wie man aus der rechten Hälfte der Fig. 8 und 9 erkennen kann, greifen im aufgeschobenen Zustand der Verriegelungskappen 15 die elastischen Gegenrasten 103a und 103b hinter die Rasten 92a und 92a` der Verbindungsteile 17 und 17` und werden zusätzlich von den Randleisten 24a und 24a` gekontert.

Die Anschläge 104a und 104b liegen hingegen lediglich von vorne an den Ecken 90a und 90b der Führungsteile 17 und 17` an.

Die Verriegelungskappen 15 und 15` halten somit die Verbindungsteile 17 und 17` in einer Richtung parallel zur dritten Achse 4 zusammen und sichern somit die Steckverbindung 1 gegen unbeabsichtigtes Lösen in Richtung der Pfeile 19 und 19` aus Fig. 1.

Zum Lösen der Verriegelungskappen 15, 15` ist es lediglich erforderlich, in Richtung der zweiten Achse 3 seitlich gegen die Griffmulden 100 zu drücken. Infolge der vorgesehenen Hohlräume 101a und 101b sowie des Hohlraums 102 verformen sich die Verriegelungskappen 15 und 15` dabei derart, daß sich die elastischen Gegenrasten 103a und 103b von den Verbindungsteilen 17 und 17` weg wölben und somit außer Eingriff mit den Rasten 92a und 92 b geraten.

Die Verbindungsteile 17, 17` und die Verriegelungskappen 15, 15` werden vorzugsweise einstükkig aus Kunstsoff, vorzugsweise aus Polyäthersulfon (PESU) hergestellt. Die Komponenten der Linsenkupplung 30, soweit es sich nicht um Gummiringe oder Glaskugeln bzw. Glasfenster handelt, können hingegen aus Kunststoff oder aus Metall hergestellt werden, je nachdem, wie dies im Einzelfall zweckmäßig ist.


**Ansprüche**

1. Steckverbindung für Lichtleiter mit einem ersten Steckerteil (13) und einem zweiten Steckerteil (13`), in denen Lichtleiterabschnitte (11, 11`) an eine transparente Stirnfläche (67, 67`) geführt sind, wobei die Steckerteile (13, 13`) derart miteinander verrastbar sind, daß die Stirnflächen (67, 67`) in einer Radialebene (3, 4) aneinanderstoßen, dadurch gekennzeichnet, daß die Steckerteile (13, 13`) durch Verschiebung der Stirnflächen (67, 67`) in der Radialebene (3, 4) voneinander lösbar bzw. miteinander verbindbar sind.

2. Steckverbindung nach Anspruch 1, dadurch gekennzeichnet, daß die Steckerteile (13, 13`) identisch ausgebildet sind.

3. Steckverbindung nach Anspruch 2, dadurch gekennzeichnet, daß die Steckerteile (13, 13`) im verbundenen Zustand zu einem Mittelpunkt der Stirnfläche (67, 67`) punktsymmetrisch angeordnet sind.

4. Steckverbindung nach einem der Ansprüche 1 bis 3, dadurch gekennzeichnet, daß die Lichtleiterabschnitte (11, 11`) in den Steckerteilen (13, 13`) mittels einer Kabelhülse (57, 57`) in einer Richtung (2) geführt sind, die im wesentlichen lotrecht zu der Radialebene (3, 4) verläuft.

5. Steckverbindung nach Anspruch 4, dadurch gekennzeichnet, daß die Lichtleiterabschnitte (11, 11`) in den Kabelhülsen (57, 57`) von formschlüssigen Haltemitteln des jeweils anderen Steckerteils (13`, 13) gehalten werden.

6. Steckverbindung nach Anspruch 5, dadurch gekennzeichnet, daß die Kabelhülsen (57, 57`) an Abschnitten ihrer Länge, über mindestens einen Teil ihres Umfanges freiliegend, vom Steckerteil (13, 13`) gehalten werden und die Haltemittel and den freiliegenden Umfangsteilen angreifen.

7. Steckverbindung nach Anspruch 5 oder 6, dadurch gekennzeichnet, daß die Haltemittel als elastische Schnappzangen (71, 71`, 72, 72`) ausgebildet sind.

8. Steckverbindung nach Anspruch 6 und 7, dadurch gekennzeichnet, daß die Kabelhülsen (57, 57`) mit kreiszylindrischen Außenkonturen versehen sind, und daß die Schnappzangen (71, 71`, 72, 72`) als einseitig offenes Klauenpaar (79) ausgebildet sind, das eine kreiszylindrische Aufnahme aufweist und mit Einführschrägen an den freien Enden der Klauen (79) versehen ist.

9. Steckverbindung nach einem der Ansprüche 1 bis 8, dadurch gekennzeichnet, daß die Steckerteile (13, 13`) mit einer Keilfläche (81, 81`) versehen sind, die beim Zusammenfügen der Steckerteile (13, 13`) eine kraftschlüssige Anlage der Stirnflächen (67, 67`) aufeinander bewirkt.

10. Steckverbindung nach Anspruch 9, dadurch gekennzeichnet, daß die Keilflächen (81, 81`) an einem Führungsblock (73, 73`) angebracht sind, der die Kabelhülse (57, 57`) fest aufnimmt.

11. Steckverbindung nach Anspruch 7 und 10, dadurch gekennzeichnet, daß die Kabelhülsen (57, 57`) aus den Führungsblöcken (73, 73`) axial herausragen und dort von der Schnappzange (71`, 71) des jeweils anderen Steckerteils (13`, 13) ergriffen werden, wobei die Schnappzangen (71`, 71) mit einer Stirnfläche (97`, 97) auf der Keilfläche (81`, 81) laufen.

12. Steckverbindung nach Anspruch 11, dadurch gekennzeichnet, daß die Kabelhülsen (57, 57`) beidseitig aus den Führungsblöcken (73, 73`) herausragen und beidseitig von Schnappzangen (71`, 71, 72`, 72) des jeweils anderen Steckerteils (13`, 13) ergriffen werden.

13. Steckverbindung nach einem der Ansprüche 3 bis 12, dadurch gekennzeichnet, daß die Steckerteile (13, 13`) Verbindungsteile (17, 17`) aufweisen, die mit Anlageflächen (89, 89`) versehen sind, die senkrecht zur Radialebene (3, 4) und durch den Mittelpunkt der Stirnfläche (67, 67`) verlaufen.

14. Steckverbindung nach Anspruch 13, dadurch gekennzeichnet, daß die Verbindungsteile (17, 17`) mit den Schnappzangen (71, 71`, 72, 72`) und vorzugsweise mit den Führungsblöcken (73, 73`) einstückig ausgebildet sind.

15. Steckverbindung nach Anspruch 13 oder 14, dadurch gekennzeichnet, daß die Verbindungsteile (17, 17`) an ihren von der Radialebene (3, 4) abgewandten Enden mit Rasten (92a, 92b, 92a`, 92b`) versehen sind und daß im zusammengefügten Zustand der Verbindungsteile (17, 17`) Verriegelungskappen (15, 15`) über die zusammengefügten Verbindungsteile (17, 17`) schiebbar sind, die mit Gegenrasten (103a, 103b) elastisch hinter die Rasten (92a, 92b, 92a`, 92b`) greifen.

16. Steckverbindung nach Anspruch 15, dadurch gekennzeichnet, daß die Verriegelungskappen (15, 15`) mit Hohlräumen (101, 102) versehen sind, derart, daß bei manuellem Zusammendrücken der Hohlräume (101, 102) die Gegenrasten (103a, 103b) sich von den Rasten (92a, 92b, 92a`, 92b`) lösen.

17. Steckverbindung nach einem der Ansprüche 4 bis 16, dadurch gekennzeichnet, daß die Kabelhülsen (57, 57`) im Bereich der Stirnfläche (67, 67`) mit einer transparenten Kugel (51) versehen sind, an die auf der von der Stirnfläche (67, 67`) abgewandten Seite der Lichtleiterabschnitt (11, 11`) stirnseitig angrenzt.

18. Steckverbindung nach Anspruch 17, dadurch gekennzeichnet, daß eine Stirnseite des Lichtleiterabschnitts (11, 11`) im Abstand von der Oberfläche der transparenten Kugel (51) angeordnet ist.

19. Steckverbindung nach Anspruch 18, dadurch gekennzeichnet, daß der Abstand so bemessen ist, daß die Stirnseite sich im Brennpunkt der Kugel (51) befindet.

20. Steckverbindung nach Anspruch 17 oder 18, dadurch gekennzeichnet, daß die Kugel (51) in einem den Abstand herstellenden Kugelbett (48) gelagert ist.

21. Steckverbindung nach einem der Ansprüche 17 bis 20, dadurch gekennzeichnet, daß die Kugel (51) mittels eines transparenten Schutzfensters (65) zur Stirnfläche (67, 67`) hin gekaspelt ist.

22. Steckverbindung nach einem der Ansprüche 17 bis 21, dadurch gekennzeichnet, daß die Kugel (51) und das stirnseitige Ende des Lichtleiterabschnittes (11, 11`) zwischen Dichtungen (45, 52) in einer Längsbohrung (56) der Kabelhülse (57, 57`) gekapselt sind.

23. Steckverbindung nach einem der Ansprüche 4 bis 22, dadurch gekennzeichnet, daß der Lichtleiterabschnitt (11, 11`) an seinem Umfang in die Kabelhülse (57) eingequetscht ist.

24. Steckverbindung nach Anspruch 23, dadurch gekennzeichnet, daß der Lichtleiterabschnitt (11, 11`) abschnittsweise im Querschnitt (31 bis 34) reduziert und an unterschiedlichen Querschnitten (31, 32) in die Kabelhülse (57) eingequetscht ist.

25. Steckverbindung nach Anspruch 24, dadurch gekennzeichnet, daß der Lichtleiterabschnitt (11, 11`) in einem Bereich kleineren Querschnitts (32) in eine Faserendhülse (37) unter Erzeugung eines Polygonquerschnitts der Faserendhülse (37) eingequetscht ist, daß auf den Polygonquerschnitt die Kabelhülse (57) auf einen Bereich größeren Querschnitts (31) aufgeschoben ist und dort unter Erzeugung eines um einen halben Polygon-Mittelpunktwinkels versetzten Polygons der Kabelhülse (57) eingequetscht wird.

26. Steckverbindung nach einem der Ansprüche 1 bis 24, dadurch gekennzeichnet, daß die Stirnfläche (67) mit einer Ringdichtung (66) versehen ist.

27. Steckverbindung nach einem der Ansprüche 1 bis 25, dadurch gekennzeichnet, daß die Steckerteile (13, 13`) im zusammengefügten Zustand eine im wesentlichen quaderförmige Gestalt aufweisen.

28. Steckverbindung nach einem der Ansprüche 1 bis 27, dadurch gekennzeichnet, daß eine Montageschiene (26) im wesentlichen senkrecht zur Verschieberichtung der Steckerteile (13, 13`) angeordnet ist und daß die Steckerteile (13, 13`) mit Haltemitteln an der Montageschiene (26) befestigbar sind.

29. Steckverbindung nach Anspruch 28, dadurch gekennzeichnet, daß die Haltemittel als Haken (21a, 21b, 21a`, 21b`) ausgebildet sind, die an den Steckerteilen (13, 13`) angeordnet und elastisch in Aussparungen (27a, 27b) der Montageschiene (26) einklipsbar sind.

30. Steckverbindung nach Anspruch 13 und 29, dadurch gekennzeichnet, daß die Haken (21a, 21b, 21a`, 21b`) einstückig mit den Verbindungsteilen (17, 17`) ausgebildet sind.

Fig.1

Fig. 2

Fig. 3

Fig. 4

Fig. 5

Fig. 6

EP 0 305 832 A2

Fig. 7

Fig.8

Fig.9